# EUROPÄISCHE PATENTANMELDUNG

(11) **EP 4 559 606 A1**
(43) Veröffentlichungstag der Anmeldung: **28.05.2025**
(21) Anmeldenummer: 24215261.9
(22) Anmeldetag: 25.11.2024
(51) Int. Cl.: B23D 57/00, B27B 5/10, B27B 11/12

(54) **FAHRZEUGMONTIERTE MOBILE SÄGE ZUM ZERKLEINERN UND RECYCLING VON GROSSEN WERKSTÜCKEN**

(30) Priorität: 24.11.2023 DE 202023106978 U; 04.09.2024 DE 202024105034 U
(71) Anmelder: INRO Industrierohstoffe GmbH, 63811 Stockstadt (DE)
(72) Erfinder: Westarp, Werner, 63811 Stockstadt (DE)
(74) Vertreter: Eisenführ Speiser

(57) **Zusammenfassung**

Die vorliegende Offenbarung betrifft eine fahrzeugmontierte Säge (12, 12`) zum Zerkleinern von Werkstücken (26), umfassend ein Sägeblatt (24) und einen an das Sägeblatt (24) mechanisch gekoppelten Motor (28) zum Antreiben des Sägeblatts (24) zu einer Hinführungs-bewegung und einer Rückführungsbewegung, wobei die Säge (12, 12') einen sägeseitigen Teil einer Kopplungsvorrichtung (18) oder einen Adapteranschluss zur Montage der Säge (12, 12`) an ein Fahrzeug (10) umfasst. Die Offenbarung betrifft ebenfalls ein Fahrzeug mit einer derartigen fahrzeugmontierten Säge (12, 12`) sowie ein Verfahren zum Zerkleinern von Werkstücken (26).

## Beschreibung

Die Erfindung betrifft den Bereich der Zerkleinerung von Werkstücken, insbesondere großen Werkstücken aus Gusseisen, Stahl und/oder Nichteisenmetalle sowie alle sägbaren Werkstoffe, wie z.B. Kunststoffe, Holz.

Große Werkstücke, wie sie beispielsweise aus Stahl als große behälterähnliche Werkstücke oder aus Gußeisen als Naben oder Lager in Windkraftanlagen eingesetzt werden, aber auch aus Stahl oder Nichteisenmetallen, werden am Ende ihrer Lebensdauer oder bei zu hohem Verschleiß außer Betrieb genommen. Manche Werkstücke sind so groß oder schwer, dass sie aufwendig mit Schwerlast-Transportern bewegt werden müssen und zum Beispiel bei 25-60 Tonnen Stückgewichten nur noch stark reduziert möglich ist. Ab 60to Stückgewicht ist ein Transport über die Straße faktisch nicht mehr möglich. Die für die Schwertransporte nötigen Prozesse umfassen das Einholen von entsprechenden Genehmigungen und erfordern einen immensen organisatorischen Aufwand, der sich in den Kosten niederschlägt. So liegen die Frachtkosten für Schwerlast-Transporter je Tonne um einen Faktor zwischen 5-10 höher.

Um die Kosten des Transports und den damit verbundenen Aufwand zu verringern, werden große Werkstücke häufig vor Ort zerkleinert, sodass die einzelnen Teilstücke von beispielsweise Tiefladern, Lkw oder gar Pritschenwagen abtransportiert werden können.

Aus dem Stand der Technik sind Verfahren bekannt, mit denen große Werkstücke zerkleinert werden können. Beispielsweise werden beim Schneidbrennen mit Thermolanzen oder Sauerstofflanzen verwendet, bei denen große Mengen von Gas verbrannt werden, um hohe Temperaturen zu erzeugen. Wird das Werkstück mit einer solchen Lanze in Kontakt gebracht, schmilzt im Schnittkanal das Metall auf, wodurch das Werkstück in kleinere Teilstücke zerlegt wird. Bei einem solchen Prozess wird viel Energie benötigt und große Mengen von CO₂ sowie von Feinstaub werden freigesetzt. Diese Verfahren sind daher nicht sehr nachhaltig. Ferner wird bei dem Einsatz von Thermolanzen immer auch ein Teil des Werkstücks verbrannt. Je nach Einsatz kann der Anteil des verbrannten Materials bis zu 10 % betragen, der für den Werkstoffkreislauf unwiederbringlich verloren ist.

Ferner sind motorisierte Sägen für gusseiserne Werkstücke bekannt. Insbesondere motorisierte Bügel-Sägen können je nach Sägeblatt geeignet sein, alle möglichen Materialien maximal 600 x 600 mm zu zersägen. Bekannte motorisierte Sägen sind jedoch stationär und werden so verwendet, dass das Werkstück zur Säge bewegt und gegebenenfalls in einer Haltevorrichtung fixiert wird. Solche Sägen sind aufgrund ihrer Abmessungen und Bauart nicht geeignet große Werkstücke zu zerkleinern.

Das Deutsche Patent- und Markenamt hat im Rahmen der prioritätsbegründenden Anmeldung Sägen im Stand der Technik in den Veröffentlichungen DE 91 06 836 U1, US 6,718,661 B1, US 10,798,877 B2, US 5,242,121 A, US 2008/0 289 472 A1 und US 2020/0 340 207 A1 recherchiert.

Werkstücke der Größenordnung, für die ein Schwertransport notwendig ist, beispielsweise bei einem Gewicht von 24 t bis 40 t oder mehr und Größen bis 5.000 x 5.000 mm, können nicht ohne Weiteres zur Säge bewegt oder gar darin fixiert werden.

Die Aufgabe der Erfindung ist es daher, eine Vorrichtung bereitzustellen, mit der auch große Werkstücke vor Ort emissionsarm und den Anforderungen der Zukunft angepasst zerkleinert werden können.

Die Aufgabe wird durch die Gegenstände der unabhängigen Ansprüche gelöst.

In einem ersten Aspekt betrifft die Erfindung eine fahrzeugmontierte bzw. fahrzeugmontierbare und damit mobile Säge zum Zerkleinern von Werkstücken, insbesondere für Naben oder Lager von Windkraftanlagen sowie großen behälterähnlichen Werkstücken, ein Sägeblatt und einen an das Sägeblatt mechanisch gekoppelten Motor zum Antreiben des Sägeblatts zu einer Hinführungsbewegung und einer Rückführungsbewegung. Die Säge umfasst ferner einen sägeseitigen Teil einer Kopplungsvorrichtung oder einen Adapteranschluss zur Montage der Säge an ein Fahrzeug.

Der Begriff ,fahrzeugmontiert` meint im Rahmen dieser Erfindung, dass die Säge an einem Fahrzeug montiert ist oder an ein Fahrzeug montierbar ist. Das bedeutet, dass sie grundsätzlich zur Montage ausgestaltet ist, indem sie beispielsweise nicht über eine Standvorrichtung wie einen Tisch, sondern über eine Kopplungsvorrichtung oder einen Adapteranschluss für die Montage an einem Fahrzeug verfügt.

Geeignete Fahrzeuge, an denen die Säge montiert werden kann, sind insbesondere Gabelstapler, Bagger oder Traktoren. Diese Fahrzeuge haben nicht nur die notwendige Leistung zum Betrieb der Säge. Sie sind häufig auch hinreichend schwer, um trotz des Betriebs der Säge fest stehen zu können. Außerdem sind insbesondere Bagger und Traktoren geeignet, um auch in unwegsamem Gelände eingesetzt werden zu können, sodass die großen Werkstücke direkt an ihrem ursprünglichen Einsatzort ökonomisch und ökologisch zerkleinert werden können.

Darüber hinaus sind alle Fahrzeuge als Trägerfahrzeuge geeignet, bei denen Werkzeugaufhängungen üblich sind. Das kann beispielsweise Lkw, Unimogs oder gar gepanzerte Fahrzeuge für militärische oder sicherheitskritische Zwecke umfassen.

Vorzugsweise kann ein Betrieb der fahrzeugmontierten Säge durch deren Konstruktion und Bauart auch im Solobetrieb, also ohne Fahrzeug, möglich sein. Beispielsweise kann die Säge auf eine Plattform oder einen Sockel gestellt werden. Hierfür kann der Sockel einen geeigneten Adapteranschluss, analog zu dem an dem Fahrzeug vorgesehenen Adapteranschluss, aufweisen. Nachfolgende, das Fahrzeug betreffende Ausführungen zum Adapteranschluss sind für den Fachmann (m/w/d) selbstverständlich auch auf Plattformen bzw. Sockel analog anwendbar.

Da motorisierte Sägen zu schwer sind, um von einer oder mehreren Personen mobil verwendet zu werden, löst die vorgeschlagene Säge die Aufgabe der Erfindung. Ihr Betrieb stößt im Vergleich zu Thermolanzen deutlich weniger CO₂ aus und durch die Montage an einem Fahrzeug können auch größte Werkstücke zerkleinert werden, sodass die so entstehenden Einzelteile im normalen LKW-Verkehr und damit weniger aufwendig als mit Schwertransporten abtransportiert werden können. Das Bewegen, Sichern, Wegräumen oder Verladen der zerkleinerten Werkstücke kann per Bagger oder Kran mit entsprechenden Zusatzgeräten wie z.B. große Magnetplatte, Spinnengreifer oder Lasthaken erledigt werden.

Selbst der beim Sägen entstehende Späneanteil kann im Anschluss an das Zerkleinern zu näherungsweise 100% abgesaugt oder gesammelt und dem Werkstoffkreislauf zugeführt werden. Beispielsweise kann die Zerkleinerung auf einer Folie durchgeführt werden, die im Anschluss zusammengefaltet wird, sodass die Metallspäne darin gesammelt wird. Alternativ lässt sich insbesondere Eisenspäne auch mit Magneten einsammeln, oder per leistungsstarker Staubsauger (bereits erprobt).

Die Kopplungsvorrichtung kann beispielsweise eine Aufhängung für eine Montage an einem Baggerarm oder eine Aufnahme für die Gabel eines Gabelstaplers umfassen.

Die Säge weist einen von zwei Teilen der Kopplungsvorrichtung auf. Der andere Teil befindet sich am Fahrzeug. Beide Teile zusammen sind geeignet, die Säge mit dem Fahrzeug zu verbinden.

Die Kopplungsvorrichtung als Ganzes stellt eine mechanische Verbindung zwischen der Säge und dem Fahrzeug her, sodass die Säge fest mit dem Fahrzeug verbunden ist.

Ferner kann die Kopplungsvorrichtung in einer Ausführungsform eine elektrische Verbindung zwischen der Säge und dem Fahrzeug herstellen. In vorteilhafter Weise bewirkt eine elektrische Verbindung, dass die Säge vom Fahrzeug mit elektrischem Strom versorgt wird.

In einer Ausführungsform kann die Kopplungsvorrichtung auch eine elektronische Verbindung zwischen der Säge und dem Fahrzeug herstellen. In vorteilhafter Weise bewirkt eine elektronische Verbindung, dass die Säge vom Fahrzeug aus gesteuert werden kann und kein eigenes Steuergerät benötigt.

In einer Ausführungsform umfasst die Säge ferner einen u-förmigen, nach unten offenen Bügel, in den das Sägeblatt eingespannt ist. Die Säge kann gemäß dieser Ausführungsform als Bügelsäge ausgeführt sein. Alternativ kann die Säge auch als Stichsäge, Bandsäge oder Kettensäge oder auch mit Fräsköpfen oder Frässcheiben ausgeführt sein.

Die Werkzeugaufnahme ist besonders bevorzugt unabhängig von der Ausführung der Säge, also als Bügelsäge, Stichsäge, Bandsäge, Kettensäge oder mit Fräsköpfen bzw. Frässcheiben ausgestattete Säge gleich. Damit ist auch ein Wechsel der Sägen je nach Anwendungsfall rasch möglich. Vorzugsweise erfolgt die Werkzeugaufnahme in einem Schnellverfahren über Adapter.

Vorzugsweise weist der Bügel eine Seitenführung in Teleskopform auf. Damit ist der Bügel nach oben anpassbar, was für höhere bzw. größere Werkstücke notwendig sein kann. Vorzugsweise ist die Seitenführung elektrisch ansteuerbar. Alternativ kann die Seitenführung manuell betätigt werden.

In einer Ausführungsform sind der Motor und der Bügel der Säge über ein Getriebe miteinander gekoppelt, das die Hinführungsbewegung oder die Rückführungsbewegung in eine wenige mm hohe bogenförmige Bewegung umwandelt.

Eine solche bogenförmige Bewegung kann insbesondere als Leerhub oder Tothub ausgeführt werden. Das bewirkt, dass die Zerspanungswirkung des Sägeblatts auf das Werkstück nur bei einer von beiden Bewegungsrichtungen eintritt. Das Sägeblatt kann dann so gewählt werden, dass es für eine Bewegungsrichtung, also Hinführung oder Rückführung, optimiert ist, was seine Lebensdauer erhöht und den Verschleiß senkt. Diese Ausführung hat sich in der praktischen Umsetzung bereits als besonders vorteilhaft erwiesen. Besonders bevorzugt ist die bogenförmige Bewegung durch eine besonders geformte Scheibe vorgegeben.

In einer Ausführungsform ist hierbei die Länge der Hinführungsbewegung und der Rückführungsbewegung und optional der Hub der bogenförmigen Bewegung stufenlos verstellbar. Damit ist eine besonders genaue Einstellung der Sägebewegung auf das zu zersägende Werkstück möglich.

In einer weiteren Ausführungsform ist der Bügel der Säge relativ zum sägeseitigen Teil der Kopplungsvorrichtung verschwenkbar, sodass das Gewicht des Bügels den Bügel nach unten senkt, während sich die Kopplungsvorrichtung beim Betrieb der Säge in Ruhe befindet.

Die Verschwenkbarkeit des Bügels ermöglicht ein gravitationsgetriebenes Sägen, bei dem das Sägeblatt mit der Gewichtskraft des Bügels auf das Werkstück gedrückt wird, während es das Werkstück zersägt.

Alternativ ist eine hydraulische Auf- und Absteuerung machbar. Hierbei ist in einer Ausführungsform eine eigene Hydraulik, insbesondere eine einstellbare Hydraulik mit einstellbarem Druck, zum Unterstützen des Drucks des Sägeblatts nach unten in Richtung des Werkstückes vorgesehen.

In der Ausführungsform, in der die Hin- oder die Rückführungsbewegung eine bogenförmige Bewegung ist, muss sichergestellt sein, dass die Kraft des Sägeblatts auf das Werkstück nicht zu groß ist, da sonst das Sägeblatt beschädigt werden, insbesondere reißen kann. Andererseits sollte die Kraft auch nicht zu gering sein, da sonst die Zerspanungswirkung der Säge zu gering ist und der Prozess des Zerkleinerns länger dauert. Das kann erreicht werden, indem das Getriebe so ausgestaltet ist, dass der Bügel in der nicht-bogenförmigen Bewegung frei gelagert ist.

In einer Ausführungsform kann die Säge ferner ein Justiergewicht umfassen, mit dem beispielsweise über einen Hebel die Gewichtskraft des Bügels und des Sägeblatts auf das Werkstück eingestellt werden kann.

In vorteilhafter Weise bewirkt ein Justiergewicht, dass die Gewichtskraft unabhängig von der Lage der Säge mit einer konstanten Kraft und damit mit einer konstanten Zerspanungswirkung arbeiten kann.

In einer Ausführungsform umfasst die Säge ferner eine Führungsvorrichtung zum Führen von Flüssigkeit zum Sägeblatt. Die geführte Flüssigkeit kann insbesondere Wasser oder ein Öl sein. Die Flüssigkeit hat die Funktion, das Sägeblatt während des Sägens zu kühlen und eine Überhitzung zu verhindern. Ein Überhitzen des Sägeblatts kann das Sägeblatt selbst, den Bügel oder den Motor der Säge beschädigen.

In einer Ausführungsform umfasst der Bügel eine Schnellspannvorrichtung, in die das Sägeblatt einspannbar ist.

Eine Schnellspannvorrichtung bewirkt in vorteilhafter Weise, dass das Sägeblatt schnell getauscht werden kann, wenn es beim Sägen beispielsweise beschädigt wurde oder wenn der Abnutzungsgrad des Sägeblatts ein effizientes Sägen nicht länger zulässt.

In einer Ausführungsform ist die Kopplungsvorrichtung als Schnellspannvorrichtung ausgestaltet.

In vorteilhafter Weise bewirkt eine als Schnellspannvorrichtung ausgestaltete Kopplungsvorrichtung, dass die Säge unabhängig vom Fahrzeug an ihren Einsatzort transportiert werden kann. Beispielsweise kann die Säge als Aufsatz für einen Baggerarm angeliefert werden, sodass sie bei Bedarf gegen einen Baggerlöffel getauscht werden kann. Ferner kann sich auch das Fahrzeug ohne eine gekoppelte Säge bewegen, während die Säge selbst sicher verstaut, separat oder als Fracht transportiert wird. So sind keine Sicherheitsmaßnahmen für die Überführung in am Fahrzeug montierten Zustand im Straßenverkehr notwendig. Dennoch kann die Säge nach Erreichen des Einsatzortes schnell eingesetzt werden, weil die Schnellspannvorrichtung ein schnelles Koppeln der Säge mit dem Fahrzeug ermöglicht.

In einem weiteren Aspekt betrifft die Erfindung ein Fahrzeug mit einer fahrzeugmontierten Säge, wie sie voranstehend beschrieben wurde. Das Fahrzeug umfasst einen fahrzeugseitigen Teil einer Kopplungsvorrichtung zur Aufnahme des sägeseitigen Teils der Kopplungsvorrichtung und zur Montage der fahrzeugmontierten Säge am Fahrzeug.

In einer Ausführungsform ist der fahrzeugseitige Teil der Kopplungsvorrichtung schwenkbar, so dass die gesamte fahrzeugmontierte Säge in einer senkrechten Ebene schwenkbar ist. Vorzugsweise ist damit die Orientierung des Sägeblattes gegenüber der Horizontalen mit unterschiedlichen Neigungswinkeln einstellbar ausgeführt. Besonders bevorzugt sind damit Winkel des Sägeblattes in einem Winkelbereich von mindestens 45° einstellbar, beispielsweise von horizontal bis hin zu 45° gegenüber der Horizontalen geneigt. Diese Ausführung ermöglicht zusätzliche Anwendungsgebiete.

In einer Ausführungsform umfasst das Fahrzeug ferner ein Steuergerät zum Ansteuern des Motors der Säge, wobei das Steuergerät kommunikativ mit dem Motor der Säge gekoppelt ist.

In dieser Ausführungsform kann die Säge vom Fahrzeug aus oder durch das Fahrzeug gesteuert, insbesondere aktiviert und deaktiviert werden. In dieser Ausführungsform kann die das Fahrzeug steuernde Person zugleich die Person sein, die auch die Säge steuert, ohne das Fahrzeug verlassen zu müssen.

In einer weiteren Ausführungsform kann ein Justiergewicht ebenfalls über einen Motor verfügen und durch diesen eingestellt werden. Ist die Säge vom Fahrzeug aus steuerbar, kann dann auch das Justiergewicht vom Fahrzeug aus gesteuert werden.

In einer weiteren Ausführungsform umfasst die Säge und/oder die Kopplungsvorrichtung Sensoren, die einen oder mehrere Betriebsparameter der Säge erfassen. Die Betriebsparameter können beispielsweise, ohne auf diese Auswahl beschränkt zu sein, umfassen: Temperatur des Sägeblatts, Spannung des Sägeblatts, Position und Lage der Säge, Temperatur des Motors der Säge.

In einer Ausführungsform umfasst das Fahrzeug eine Empfangseinheit und ein Steuergerät, wobei die Empfangseinheit dazu ausgebildet ist, Befehle zur Steuerung des Fahrzeugs zu empfangen, wobei das Steuergerät dazu ausgebildet ist, die empfangenen Befehle zur Steuerung des Fahrzeugs in eine Bewegung des Fahrzeugs umzuwandeln und das Fahrzeug zu steuern.

Das Steuergerät zur Steuerung des Fahrzeugs und das Steuergerät zur Steuerung der Säge können unterschiedliche Geräte sein. Alternativ kann das Fahrzeug in einer Ausführungsform ein Steuergerät umfassen, das sowohl die Säge, als auch das Fahrzeug steuert.

Die Empfangseinheit in Verbindung mit dem Steuergerät zur Fernsteuerung des Fahrzeugs bewirkt, dass das Fahrzeug von einer Person außerhalb des Führerhauses gesteuert werden kann. Dabei kann die steuernde Person beispielsweise eine Position einnehmen, in der sie eine größere Übersicht hat und das Fahrzeug mit der Säge präziser an das Werkstück heranfahren kann.

In einer weiteren Ausführungsform umfasst das Fahrzeug eine Empfangseinheit, die dazu ausgebildet ist, Befehle zur Steuerung der Säge zu empfangen, wobei das Steuergerät zur Steuerung der Säge dazu ausgebildet ist, die Säge entsprechend der von der Empfangseinheit empfangenen Befehle anzusteuern.

In einer alternativen Ausführungsform können die Empfangseinheit und die Steuereinheit für die Säge auch Teil der Säge selbst sein, sodass die Säge unabhängig vom Fahrzeug ferngesteuert werden kann. In diesem Fall kann die Säge mit unterschiedlichen Fahrzeugen verwendet werden, ohne dass die Fahrzeuge zwingend eine Empfangsvorrichtung oder eine Steuereinheit für die Säge benötigen.

In vorteilhafter Weise kann eine Fernsteuerung der Säge dazu verwendet werden, dass die Säge von einer Person außerhalb des Fahrzeugs bedient werden kann. Die Person kann so beispielsweise eine Position einnehmen, in der sie eine größere Übersicht über die Säge, das Fahrzeug und das Werkstück hat.

In einer weiteren Ausführungsform können sowohl das Fahrzeug als auch die Säge ferngesteuert werden. Die Fernsteuerung von Säge und Fahrzeug bewirkt in vorteilhafter Weise, dass eine einzelne Person das Fahrzeug und die Säge steuern kann, während sie sich an eine Position begibt, in der sie eine größere Übersicht über das Fahrzeug, die Säge und das Werkstück hat, als sie vom Fahrerhaus des Fahrzeugs aus hätte.

In einer Ausführungsform ist der fahrzeugseitige Teil der Kopplungsvorrichtung an einem Ende eines beweglichen Arms, insbesondere eines hydraulischen Arms, befestigt. In dieser Ausführungsform ist die Position und die Lage der Säge über den Arm einstellbar.

In vorteilhafter Weise bewirkt die Kopplung der Säge an einen Fahrzeugarm, dass die Säge präziser im Raum bewegt werden kann, wodurch wiederum das Werkstück an schwer zugänglichen Stellen bearbeitet werden kann.

In einer Ausführungsform umfasst das Fahrzeug eine Hubvorrichtung, wobei der fahrzeugseitige Teil der Kopplungsvorrichtung an der Hubvorrichtung montiert ist.

Das Fahrzeug kann in dieser Ausführungsform als ein Gabelstapler ausgeführt sein, wobei der fahrzeugseitige Teil der Kopplungsvorrichtung die Gabel des Gabelstaplers ist.

In vorteilhafter Weise ermöglicht die Verwendung einer Hubvorrichtung, dass die Säge zu Beginn des Zerteilungsprozesses an eine hohe Position bewegt werden kann. Im Laufe des Sägeprozesses kann die Säge mit der Hubvorrichtung herabgelassen werden, sodass auch dickere Werkstücke zerteilt werden können.

In einer Ausführungsform umfasst das Fahrzeug eine Batterie, die das Fahrzeug und die Säge mit elektrischem Strom versorgt.

In vorteilhafter Weise kann die Batterie den Einsatz des Fahrzeugs und der Säge unabhängig von fossilen Kraftstoffen machen. Besonders bevorzugt wird die Batterie mit regenerativer Energie, beispielsweise aus Wind- oder Solarkraft, geladen. Durch den Einsatz einer Batterie kann die CO₂-Bilanz für das Zerkleinern von großen Werkstücken weiter gesenkt werden.

In einem Aspekt der Erfindung wird ein Verfahren zum Zerkleinern von Werkstücken vorgeschlagen, umfassend die folgenden Schritte: Bereitstellen eines erfindungsgemäßen Fahrzeugs mit einer fahrzeugmontierten Säge, Verbringen des Fahrzeugs an den Ort des Werkstücks, Positionieren des Sägeblatts relativ zu dem Werkstück und Zersägen des Werkstücks durch motorgetriebenes Antreiben des Sägeblatts in einer Hinführungsbewegung und einer Rückführungsbewegung.

Die Erfindung kann demnach mit einem Verfahren zum Zerkleinern von Werkstücken, insbesondere von Naben oder Lagern von Windkraftanlagen oder behälterähnlichen großen Werkstücken, unter Verwendung einer fahrzeugmontierten Säge und eines Fahrzeugs wie vorstehend beschrieben, verwendet werden. Das Verfahren umfasst mit anderen Worten ausgedrückt demnach bevorzugt die folgenden Schritte:
- Heranführen der fahrzeugmontierten Säge an das Werkstück oder einen Teil des Werkstücks mittels des Fahrzeugs,
- Zersägen des Werkstücks oder des Teils des Werkstücks,
- Umpositionieren des Werkstücks und/oder des Fahrzeugs und erneutes Heranführen der Säge an einen weiteren Teil des Werkstücks unter Verwendung des Fahrzeugs, falls das Werkstück in einem vorangegangenen Schritt nicht vollständig zerkleinert wurde,
- Zersägen des weiteren Teils des Werkstücks, wenn die Säge im vorangegangenen Schritt an den weiteren Teil des Werkstücks herangeführt wurde,
- Wiederholen der letzten beiden Schritte, bis das Werkstück hinreichend zerkleinert ist.

Das Zersägen des Werkstücks kann unter Verwendung eines Stellmotors für die Säge erfolgen, wobei der Stellmotor die Neigung des Bügels beziehungsweise den Druck des Sägeblatts auf das Werkstück steuert. Alternativ kann das Zersägen ein gravitationsgetriebenes Sägen sein, beidem das Gewicht des Bügels die Kraft bestimmt, mit der das Sägeblatt auf das Werkstück drückt.

Das Zersägen des Werkstücks kann ferner aus zwei Bewegungen bestehen, nämlich einem Hinführen des Bügels und einem Rückführen des Bügels. Das Hinführen des Bügels ist eine Bewegung, die vom Fahrzeug weg gerichtet ist.

Das Rückführen ist eine Bewegung, die zum Fahrzeug hin gerichtet ist. Die beiden Bewegungen werden insbesondere alternierend ausgeführt.

Verfügt die Säge über ein Kühlsystem, kann die Kühlflüssigkeit während dem Hinführen, dem Rückführen oder zwischen den Schritten auf das Sägeblatt geführt wird.

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
- Figur 1: zeigt eine Ausführungsform, in der das Fahrzeug ein Gabelstapler mit einer Hubvorrichtung ist.
- Figur 2: zeigt eine Ausführungsform, in der das Fahrzeug ein Bagger mit einem hydraulischen Arm ist.
- Figur 3: zeigt eine Ausführungsform, in der das Fahrzeug ein Traktor ist.
- Figur 4: zeigt eine Ausführungsform mit einer Stichsäge.

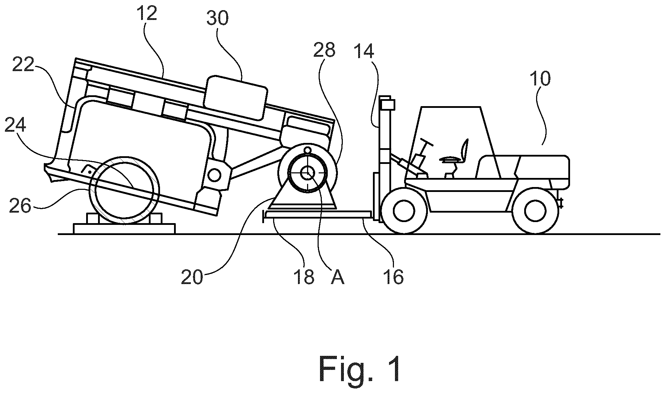

In Figur 1 ist ein Fahrzeug 10 dargestellt, an dem eine Säge 12 montiert ist. In dieser Ausführungsform ist das Fahrzeug 10 ein Gabelstapler mit einer Hubvorrichtung 14. Die Hubvorrichtung 14 eines Gabelstaplers umfasst zwei Zinken 16 einer Gabel. Die Zinken 16 bilden den fahrzeugseitigen Teil einer Kopplungsvorrichtung 18.

Die Säge 12 hat einen sägeseitigen Teil der Kopplungsvorrichtung 18, der in dieser Ausführungsform durch einen Sockel 20 gebildet ist, der Aufnahmen für die Zinken 16 des Fahrzeugs 10 aufweist. Der Sockel 20 kann ferner einen Sicherungsmechanismus, wie einen Haltebolzen oder eine Verriegelung zur kraftschlüssigen oder formschlüssigen Feststellung der Säge 12 am Fahrzeug 10 aufweisen. Ferner kann die Säge 12 über ein Kabel mit dem Fahrzeug 10 verbunden sein, über das sie mit elektrischem Strom versorgt wird.

Die Säge 12 umfasst einen u-förmigen und nach unten geöffneten Bügel 22. In den Bügel 22 ist ein Sägeblatt 24 eingespannt. Das Sägeblatt 24 wird zum Zerteilen eines Werkstücks 26 auf das Werkstück 26 aufgesetzt. Ein Motor 28 treibt die Säge 12 zu einer Sägebewegung an, sodass sich das Sägeblatt 24 abwechselnd vom Fahrzeug 10 weg und zum Fahrzeug 10 hin bewegt.

Der Bügel 22 ist um eine Achse A gelagert, sodass er sich neigen kann. Dadurch wird ermöglicht, dass die Säge 12 weniger häufig neu ausgerichtet oder an das Werkstück 26 herangeführt werden muss. Bevorzugt erlaubt die Kopplungsvorrichtung 18 eine schwenkbare Ausrichtung der gesamten Säge 12 um die Achse A, besonders bevorzugt ist ein Winkelbereich von zumindest 45° um die Achse A schwenkbar einstellbar.

Ferner umfasst die Säge 12 ein Justiergewicht 30, mit dem die Gewichtskraft, mit der das Sägeblatt 24 auf dem Werkstück 26 aufliegt, eingestellt werden kann. Wird das Justiergewicht 30 vom Fahrzeug 10 weg bewegt, erhöht sich die Gewichtskraft, wird das Justiergewicht 30 zum Fahrzeug 10 hin bewegt, verringert sich die Gewichtskraft. Dadurch kann der Zerspanungseffekt der Säge 12 und damit die Belastung des Sägeblatts 24 justiert werden.

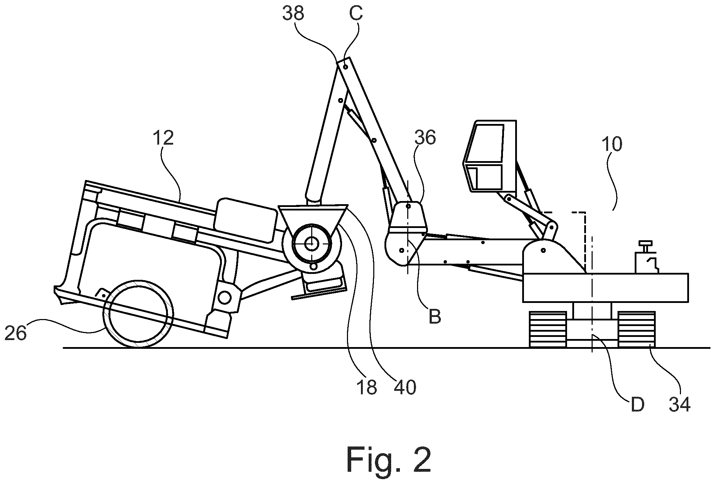

Grundsätzlich wäre es mit einem Fahrzeug 10 gemäß dieser Ausführung auch möglich, größere als das dargestellte Werkstück 26 zu zerkleinern. Dazu müsste die Säge 12 mit der Hubvorrichtung 14 nach oben gefahren werden. Figur 2 zeigt eine weitere Ausführungsform, in der das Fahrzeug 10 ein Bagger mit einem hydraulischen Baggerarm 32 ist. Der Bagger nutzt ein Kettenfahrwerk 34, sodass er auch in schwierigem Gelände noch hinreichend Halt findet.

Der Baggerarm 32 besitzt mehrere Gelenke 36 und 38, mit denen er ausgerichtet werden kann. Gelenk 36 ist um eine vertikale Achse B und Gelenk 38 um eine horizontale Achse C schwenkbar. Außerdem ist der Bagger über das Kettenfahrwerk 34 um eine vertikale Achse D drehbar, was weitere Bewegungsfreiheit ermöglicht.

Die Kopplungsvorrichtung 18 ist in dieser Ausführungsform als Aufhängung 40 ausgestaltet, die ein Kugelgelenk umfasst. Das Kugelgelenk ermöglicht es, die Säge 12 nahezu in alle Richtungen auszurichten. Dadurch kann das Fahrzeug 10 mit der Säge 12 selbst schwierig zu erreichende Teile des Werkstücks 26 erreichen oder die eigene Schieflage in schwierigem Gelände ausgleichen.

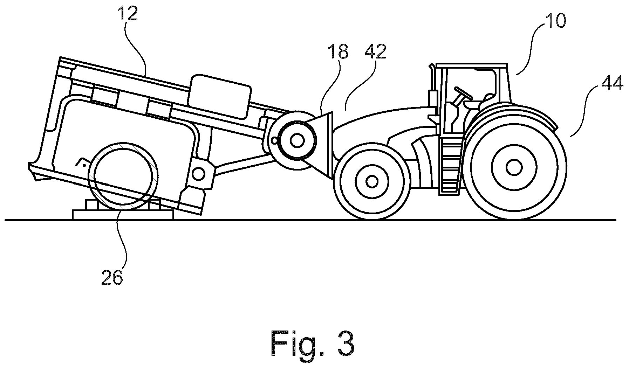

Figur 3 zeigt eine Ausführungsform, in der die Säge 12 an ein Fahrzeug 10 montiert ist, das ein Traktor ist. Die Säge 12 ist in dieser Ausführungsform über die Kopplungsvorrichtung 18 an die Front 42 des Traktors montiert. In einer alternativen Ausführungsform kann die Säge 12 auch an das Heck 44 des Traktors montiert sein.

Eine Montage der Säge 12 an der Front 42 des Fahrzeugs 10 hat den Vorteil, dass die Säge 12 im Betrieb vom Fahrerhaus einfach überwacht werden kann. Eine Montage der Säge 12 am Heck 44 des Fahrzeugs 10 hat hingegen den Vorteil, dass die Säge 12 leichter an das Werkstück 26 herangeführt werden kann, wenn das Fahrzeug 10, wie bei den Traktoren üblich, die Lenkachse vorn hat.

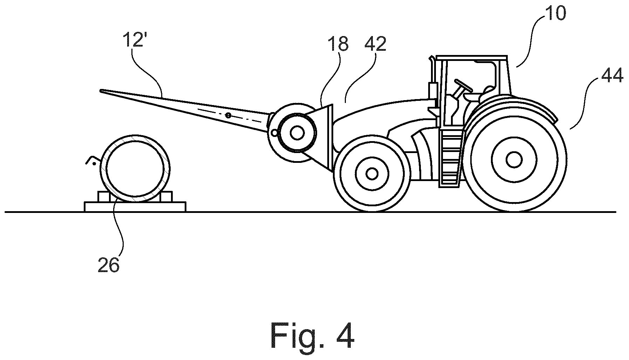

Figur 4 zeigt eine Ausführungsform, in der eine Stichsäge als Säge 12' an der Front 42 des Fahrzeugs 10, das ebenfalls wie in Figur 3 gezeigt ein Traktor ist, montiert ist. Analog kann die Säge 12' auch über die Kopplungsvorrichtung 18 an dem Bagger der Figur 2 oder dem Gabelstapler aus Figur 1 montiert werden, ohne jedoch darauf beschränkt zu sein.

Analog zu der Bügelsäge 12 der Figuren 1 bis 3 kann die Stichsäge 12`, die in Figur 4 gezeigt ist, um eine Achse in der Kopplungsvorrichtung 18 geneigt werden. Die Stichsäge 12' wird vorzugsweise von einem nicht dargestellten Motor elektrisch nach vorne und zurück bewegt, um die Sägefunktion auszuführen. Die grundlegenden Funktionsprinzipien von Stichsägen sind bekannt.

### Bezugszeichen

- 10: Fahrzeug
- 12: Säge (Bügelsäge)
- 12': Säge (Stichsäge)
- 14: Hubvorrichtung
- 16: Zinken
- 18: Kopplungsvorrichtung
- 20: Sockel
- 22: Bügel
- 24: Sägeblatt
- 26: Werkstück
- 28: Motor
- 30: Justiergewicht
- 32: Baggerarm
- 34: Kettenfahrwerk
- 36: Gelenk
- 38: Gelenk
- 40: Aufhängung
- 42: Front
- 44: Heck

- A: Achse
- B: Achse
- C: Achse
- D: Achse

## Patentansprüche

1. Fahrzeugmontierte Säge (12, 12`) zum Zerkleinern von Werkstücken (26), umfassend
a. ein Sägeblatt (24) und
b. einen an das Sägeblatt (24) mechanisch gekoppelten Motor (28) zum Antreiben des Sägeblatts (24) zu einer Hinführungsbewegung und einer Rückführungsbewegung,
**dadurch gekennzeichnet, dass** die Säge (12, 12`) einen sägeseitigen Teil einer Kopplungsvorrichtung (18) oder einen Adapteranschluss zur Montage der Säge (12, 12`) an ein Fahrzeug (10) umfasst.

2. Säge (12) nach Anspruch 1, **dadurch gekennzeichnet, dass** die Säge (12) einen u-förmigen, nach unten offenen Bügel (22) umfasst und das Sägeblatt (24) in den Bügel gespannt ist oder **dadurch gekennzeichnet, dass** die Säge (12`) als Stichsäge ausgebildet ist.

3. Säge (12, 12`) nach Anspruch 2, **dadurch gekennzeichnet, dass** der Motor (28) und der Bügel (22) bzw. die Stichsäge (12`) miteinander über ein Getriebe gekoppelt sind, das die Hinführungsbewegung oder die Rückführungsbewegung in eine bogenförmige Bewegung umwandelt.

4. Säge (12, 12`) nach Anspruch 2 oder 3, **dadurch gekennzeichnet, dass** die Länge der Hinführungsbewegung und der Rückführungsbewegung und optional der Hub der bogenförmigen Bewegung stufenlos verstellbar ist.

5. Säge (12, 12`) nach einem der Ansprüche 2 bis 4, **dadurch gekennzeichnet, dass** der Bügel (22) bzw. die Stichsäge (12`) relativ zum sägeseitigen Teil der Kopplungsvorrichtung (18) verschwenkbar ist, sodass das Gewicht des Bügels (22) den Bügel (22) nach unten senkt, während sich die Kopplungsvorrichtung (18) in Ruhe befindet.

6. Säge (12, 12`) nach Anspruch 5, die weitere eine eigene Hydraulik, insbesondere eine einstellbare Hydraulik, zum Unterstützen des Drucks des Sägeblattes (24) nach unten in Richtung des Werkstückes (26) aufweist.

7. Säge (12, 12`) nach einem der Ansprüche 2 bis 6, **dadurch gekennzeichnet, dass** der Bügel (22) eine Schnellspannvorrichtung umfasst, in die das Sägeblatt (24) einspannbar ist.

8. Säge (12, 12`) nach einem der vorherigen Ansprüche, **dadurch gekennzeichnet, dass** die Säge (12) ferner eine Führungsvorrichtung zum Führen von Flüssigkeit zum Sägeblatt (24) umfasst und/oder **dadurch gekennzeichnet, dass** die Kopplungsvorrichtung (18) eine Schnellspannvorrichtung ist.

9. Fahrzeug (10) mit einer fahrzeugmontierten Säge (12, 12`) nach einem der vorherigen Ansprüche, umfassend einen fahrzeugseitigen Teil einer Kopplungsvorrichtung (18) zur Aufnahme des sägeseitigen Teils der Kopplungsvorrichtung (18) und zur Montage der fahrzeugmontierten Säge (12, 12`) am Fahrzeug (10).

10. Fahrzeug (10) nach Anspruch 9, wobei das Fahrzeug (10) ferner ein Steuergerät zum Ansteuern des Motors (28) der Säge (12, 12`) umfasst, wobei das Steuergerät kommunikativ mit dem Motor (28) der Säge (12, 12`) gekoppelt ist.

11. Fahrzeug (10) nach einem der Ansprüche 9 oder 10, **dadurch gekennzeichnet, dass** das Fahrzeug (10) eine Empfangseinheit und ein Steuergerät umfasst, wobei die Empfangseinheit dazu ausgebildet ist, Befehle zur Steuerung des Fahrzeugs (10) zu empfangen, wobei das Steuergerät dazu ausgebildet ist, die Befehle zur Steuerung des Fahrzeugs (10) in eine Bewegung des Fahrzeugs (10) umzuwandeln und das Fahrzeug (10) zu steuern.

12. Fahrzeug (10) nach einem der Ansprüche 10 oder 11, **dadurch gekennzeichnet, dass** das Fahrzeug (10) eine Empfangseinheit umfasst, die dazu ausgebildet ist, Befehle zur Steuerung der Säge (12, 12`) zu empfangen, wobei das Steuergerät dazu ausgebildet ist, die Säge (12, 12`) entsprechend den von der Empfangseinheit empfangenen Befehle anzusteuern.

13. Fahrzeug (10) nach einem der Ansprüche 9 bis 12, **dadurch gekennzeichnet, dass** der fahrzeugseitige Teil der Kopplungsvorrichtung (18) an einem Ende eines beweglichen Arms montiert ist.

14. Fahrzeug (10) nach einem der Ansprüche 9 bis 13, **dadurch gekennzeichnet, dass** das Fahrzeug (10) eine Batterie umfasst, die das Fahrzeug (10) und die Säge (12, 12`) mit elektrischem Strom versorgt und/oder **dadurch gekennzeichnet, dass** die Kopplungsvorrichtung (18) eine Schnellspannvorrichtung umfasst, mit der die Säge (12, 12`) am Fahrzeug (10) montierbar ist.

15. Verfahren zum Zerkleinern von Werkstücken (26), umfassend die folgenden Schritte:
a. Bereitstellen eines Fahrzeugs (10) mit einer fahrzeugmontierten Säge (12, 12`) nach einem der Ansprüche 9 bis 14,
b. Verbringen des Fahrzeugs (10) an den Ort des Werkstücks (26),
c. Positionieren des Sägeblatts (24) relativ zu dem Werkstück (26)
d. Zersägen des Werkstücks (26) durch motorgetriebenes Antreiben des Sägeblatts (24) in einer Hinführungsbewegung und einer Rückführungsbewegung.
